# EUROPÄISCHE PATENTSCHRIFT

(11) **EP 1 834 756 B1**
(45) Veröffentlichungstag und Bekanntmachung des Hinweises auf die Patenterteilung: **11.05.2011**
(21) Anmeldenummer: 07103979.6
(22) Anmeldetag: 13.03.2007
(51) Int. Cl.: B29C 70/68, D03D 11/00, B29C 45/14

(54) **Kunststoffformteil mit einer dekorativen Textilschicht sowie Verfahren zu dessen Herstellung**
Plastic moulded part with a decorative textile layer and method of manufacturing same
Pièce moulée en matière plastique dotée d'une couche de textile décoratif et procédé pour sa fabrication

(30) Priorität: 15.03.2006 DE 102006011854
(43) Veröffentlichungstag der Anmeldung: 19.09.2007
(73) Patentinhaber: Polytec Automotive GmbH & Co. KG, 82538 Geretsried (DE)
(72) Erfinder: Schöntauf, Georg, 51597, Morsbach-Lichtenberg (DE)
(74) Vertreter: von Kreisler Selting Werner

(56) Entgegenhaltungen:
- EP-A- 1 767 330
- DE-A1-102004 009 244
- FR-A- 2 787 124
- FR-A1- 2 688 164

## Beschreibung

Der Gegenstand der Erfindung betrifft ein hinterspritztes, hinterpresstes oder spritzgeprägtes Kunststoffformteil umfassend eine von einem Kunststoffmaterial in Richtung der Schichtdicke teilweise durchdrungene gewirkte, gewebte oder gestrickte textile Schicht.

Kunststoffformteile, die auf mindestens einer Seite mit einem textilen Gewebe überzogen sind, finden eine breite Anwendung als Innenraumdekorverkleidungen in Automobilen. So werden sie als Verkleidungen für A-, B-, C-, und D-Säulen in Automobilen verwendet.

Kunststoffformteile, welche auf mindestens einer Seite mit einem textilen Gewebe bezogen sind, können auf unterschiedlichste Art und Weise hergestellt werden. Ein Verfahren zu ihrer Herstellung ist das Kaschierverfahren. Hierbei wird auf einem vorgefertigten Kunststoffformteil auf mindestens einer Seite ein Textil auflaminiert. Während der Laminierung wirken sowohl Druck als auch Temperatur auf das textile Gewebe des Kunststoffformteils ein.

Ein weiteres Verfahren ist das Pressverfahren, bei dem zunächst das textile Gewebe als Textilzuschnitt in einer Form, welche der Negativform des herzustellenden Kunststoffformteiles entspricht, eingebracht wird. Nachfolgend wird der geschmolzene Kunststoff in die gegenseitige Formhälfte eingebracht. Unter Hinzuziehung eines Stempels wird das Kunststoffformteil unter Anwendung von möglichst geringem Druck und möglichst geringer Temperatur in die endgültige Form gepresst. Der eingebrachte Kunststoff befindet sich, wenn er in die Form eingebracht wird, in einem fließfähigem Zustand und erhärtet in der Form durch Abkühlen. Das Kunststoffformteil wird nachfolgend in einem festen, erhärteten Zustand der Pressvorrichtung entnommen.

Bei dem sogenannten Spritzprägeverfahren wird zunächst das Textil in Form eines Zuschnitts oder auch von der Rolle in eine entsprechende Spritzgusseinheit verbracht, welche die Negativform des herzustellenden Kunststoffformteils darstellt. Die Werkzeughälften (Kern-Mulde) befinden sich hierbei noch in einem größeren Abstand als er später für das Fertigteil notwendig ist. Das Kunststoffmaterial wird nun in die geöffneten Werkzeughälften eingespritzt und zwar in der Menge, die später für das fertige Teil notwendig ist. Die Einspritzeinheit wird verschlossen und die Werkzeughälften fahren auf ihre ursprüngliche, geplante Position so weit zusammen. Hierbei wird das Material in die noch nicht gefüllten Hohlräume hineingedrückt. Spezielle Außengeometrien der Berandungsbereiche des Kunststoffformteils stellen sicher, dass kein unnötiges Material nach außen dringt. Nach Verfestigung des Kunststoffes wird das Kunststoffformteil aus der Spritzeinheit entnommen und weiteren Bearbeitungsschritten nach Bedarf unterzogen.

Bei dem sogenannten Hinterspritzverfahren wird zunächst das Textil in Form einen Textilzuschnitts in einer Spritzgießeinheit verbracht, welche die Negativform des herzustellenden Kunststoffformteiles hat. Nachfolgend wird das Textil mit geschmolzenem, fließfähigem Kunststoff unter hohem Druck und hoher Temperatur in der Spritzgießeinheit hinterspritzt. Nach Verfestigung des Kunststoffes wird das Kunststoffformteil aus der Spritzgießeinheit entnommen und weiteren Bearbeitungsschritten unterzogen.

Sofern bei der Herstellung der Kunststoffformteile des Standes der Technik gewebte, gewirkte oder gestrickte Textilien als Dekormaterialen verwendet werden, ist stets eine Zwischenschicht als Unterware verwendet worden, um ein Durchschlagen des Kunststoffmaterials durch das Textil bis zur Dekorseite zu vermeiden. Zwischenschichten wie Folien oder Vliese oder andere Schutzschichten stellen im Stand der Technik zur Herstellung von dekorierten Verbundstoffformteilen somit stets das Untermaterial dar, auf das ein Dekormaterial z.B. ein Textil aufgebracht ist.

So werden in der DE 197 29 780.3 Kunststoffformteile als Säulenverkleidungen für Säulen für Kraftfahrzeugen offenbart. Hierbei handelt es sich um Kunststoffformteile mit dekorativer Oberfläche, wobei das Kaschierungsmaterial rückseitig mit einem porösen Vlies belegt ist. Dieses Vlies ist fest mit dem eingesetzten Kaschierungsmaterial verbunden. Beim Hinterspritzen nimmt das poröse Vlies teilweise das Kunststoffmaterial auf, wodurch eine bessere Verbindung des Vliesmaterials sowie auch indirekt des Kaschierungsmaterials mit dem hinterspritzten Kunststoff ermöglicht wird. Auch die DE 198 33 336 offenbart hinterspritzte Kunststoffformteile für Säulenverkleidungen von Kraftfahrzeugen, wobei Vliesschichten mit einem thermoplastischen Kunststoff hinterspritzt werden und auf das hinterspritzte Vlies ein Dekormaterial aufgebracht ist.

Im weiteren Stand der Technik (DE 10 2004 009 244) wird ein Kunststoffformteil offenbart mit einer von einem Kunststoffmaterial in Richtung der Schichtdicke teilweise durchdrungenen Vliesschicht, wobei auf der von dem Kunststoffmaterial abgewandten Seite der Vliesschicht eine Dekorschicht aufgebracht ist, wobei die Vliesschicht zumindest einen Anteil an Fasern enthält, die aus mindestens zwei Schichten mit unterschiedlichen Schmelzpunkten bestehen, so dass bei einem Teil der Fasern zumindest ein Teil der Schicht mit niedrigerem Schmelzpunkt aufschmilzt und eine Verbindung mit dem Kunststoffmaterial eingeht, und bei einem anderen Teil der Fasern zumindest ein Teil der Schicht mit niedrigerem Schmelzpunkt aufschmilzt und eine Verbindung mit der Dekorschicht eingeht.

In der EP 0 968 806 A1 wird ebenfalls ein Spritzguß-Kunststoffformteil offenbart mit einer Dekorschicht und mit einem aus Mikrofasern bestehenden Vlies als Bindeschicht.

Im weiteren Stand der Technik gab es Bestrebungen die Zahl der Schichten und so die Kosten für die Herstellung von Kunststoffformteilen zu verringern. So offenbart die DE 10 2004 009 245 ein Kunststoffformteil mit einer von einem Kunststoffmaterial in Richtung der Schichtdicke teilweise durchdrungenen Vliesschicht, wobei die von dem Kunststoffmaterial abgewandte Seite der Vliesschicht das abschließende Dekor des Kunststoffformteiles darstellt, und weitere Schichten nicht vorhanden sind. Solche Kunststoffformteile mit lediglich einem Vlies als Dekorschicht genügt geringeren Ansprüchen hinsichtlich Qualität und Ästhetik.

In der FR-A-2688164 werden die Merkmale der Oberbegriffe der Ansprüche 1 und 11 offenbart.

Im Stand der Technik ist es bisher jedoch noch nicht gelungen höherwertige Textilien, nämlich Gestricke, Gewirke und Gewebe, ohne Verwendung von zusätzlichen Schutz- oder Zwischenschichten, d.h. ohne einer Unterware, direkt mit einem Kunststoffmaterial zu hinterspritzen, um ein mit einem "echten" hochwertigen Textil dekoriertes Kunststoffformteil zu erhalten.

Nachteilig bei den Kunststoffformteilen des Standes der Technik ist der teure Schichtaufbau von mindestens zwei Schichten von Folie oder Vlies als Unterware und textilem Dekor als Oberware. Dadurch entstehen hohe Kosten sowie auch ein höheres Gewicht.

Weitere Nachteile ergeben sich aus dem mehrschichtigen Aufbau hinsichtlich des Recyclings.

Ausgehend von diesem Stand der Technik war es die Aufgabe kostengünstigere Kunststoffformteile mit geringerem Gewicht bereitzustellen, die ein qualitativ und ästhetisch höherwertiges gewirktes, gewebtes oder gestricktes textiles Dekor aufweisen.

Die Aufgabe wird durch die Merkmale des Anspruchs 1 gelöst.

Die vorliegende Erfindung stellt somit ein Kunststoffformteil 1 bereit, mit einer gewirkten, gewebten oder gestrickten textilen Schicht 3 als Dekor, wobei die Textilschicht 3 direkt mit einem schmelzflüssigen (und anschließend ausgehärteten) Kunststoffmaterial 2 verbundstoffartig verbunden ist, wobei zwischen Textilschicht 3 und dem Kunststoffmaterial 2 keine weiteren Schichten vorhanden sind. Gemäß der Erfindung wird daher ein Kunststoffformteil 1 bereit gestellt, mit einer von einem Kunststoffmaterial 2 in Richtung der Schichtdicke teilweise durchdrungenen gewirkten, gewebten oder gestrickten textilen Schicht 3, wobei das Kunststoffmaterial nicht bis zur Dekorseite der Textilschicht 3 reicht, wobei zwischen Textilschicht 3 und dem Kunststoffmaterial keine weitere Schichten vorhanden sind. Dabei reicht das Kunststoffmaterial 2 nicht bis zur Dekorseite der Textilschicht 3.

Damit stellt die vorliegende Erfindung erstmals Kunststoffformteile als Verbundstoffteile bereit, die ein qualitativ und ästhetisch höherwertiges gewirktes, gewebtes oder gestricktes textiles Dekor ohne eine Zwischenschicht (oder Unterware) aufweisen, das durch direkte Einbringung (z.B. durch Hinterspritzen) von thermoplastischem Kunststoffmaterial in das genannte Textil als Dekor hergestellt werden.

Gemaß der Erfindung weist die Textilschicht 3 mindestens zwei untrennbar miteinander verwirkte, verwebte oder verstrickte Lagen 4 und 5 auf, wobei die die Dekorseite darstellende Lage 4 mindestens ein Garn aus Naturfasern oder aus synthetischem Material enthält, und wobei die der Dekorseite abgewandte Lage 5 mindestens ein Garn enthält, das aus einem niedrig schmelzenden synthetischen Material besteht. Im fertigen Kunststoffformteil ist das niedrig schmelzende Garn der Lage 5 teilweise angeschmolzen und vom Kunststoffmaterial 2 aufgenommen, bzw. darin eingebettet und mechanisch verankert.

Weiterhin ist bevorzugt, dass das niedrig schmelzende synthetische Material des Garns der Lage 5 einen Schmelzpunkt von 200 bis 240 °C, vorzugsweise von 210 bis 230 °C und besonders bevorzugt von 215 bis 225 °C aufweist. Dies ist besonders bevorzugt im Fall von Polyamid, vorzugsweise Polyamid-6.

In einer weiteren bevorzugten Ausführungsform ist die Schmelztemperatur des Garns aus einem niedrig schmelzenden synthetischen Material der der Dekorseite abgewandten Lage 5 niedriger als die Massentemperatur des eingebrachten Kunststoffmaterials 2.

Weiterhin ist bevorzugt, dass das Material des Garns der der Dekorseite abgewandten Lage 5 Polypropylen oder Polyamid, vorzugsweise Polyamid-6 ist. Die textile Schicht kann auch aus einer einzigen Lage aus Polypropylen-Garn gefertigt sein. In diesem Fall kann Polypropylen als Kunststoffträger verwendet werden, der durch Hinterspritzen der textilen Polypropylen-Schicht mit Polypropylen mit diesem Textil eine innige Verbindung eingeht.

Die Stärke des Garns der der Dekorseite abgewandten Lage 5 beträgt vorzugsweise 1 bis 150 dtex.

In einer bevorzugten Ausführungsform ist das Material des Garns der die Dekorseite darstellenden Lage 4 ausgewählt aus der Gruppe Polyester, Polypropylen, Viskose, Naturfaser. Bevorzugt enthält die Lage 4 ein Garn aus Polyester und die Lage 5 ein Garn aus Polyamid, vorbei vorzugsweise das Kunststoffmaterial 2 des Trägers Polypropylen oder PC-ABS ist. Somit wird ein Verbundstoffformteil erhalten, das ein gewebtes, gewirktes oder gestricktes Textil als Dekor enthaltend ein Polyestergarn aufweist und den oben genannten Kunststoffträger.

Das Flächengewicht der Textilschicht 3 beträgt bevorzugt von 75 bis 300 g/m², vorzugsweise von 100 bis 200 g/m².

In einer bevorzugten Ausführungsform ist das Kunststoffmaterial 2 aus thermoplastischen Polymeren ausgewählt aus der Gruppe Polyolefin, Polyethylen, Polypropylen, Polycarbonat, Polyamid, Acryl-Butadien-Styrol-Copolymer, Acryl-Butadien-Styrol-Polycarbonat-Copolymer, Polyvinylchlord, einem Polypropylen-Polyester-Gemisch, oder Gemische derselben. Besonders bevorzugt besteht das Kunststoffmaterial 2 aus Polypropylen, oder PC-ABS (Acryl-Butadien-Styrol-Polycarbonat-Copolymer).

Zudem ist bevorzugt, dass das Kunststoffformteil ein durch Formung mittels Spritzguss, Hinterprägen, Hinterpressen oder Spritzprägen hergestelltes Kunststoffformteil darstellt.

Die Aufgabe wird zudem gelöst durch ein Verfahren gemäß Anspruch 11.

Gemäß der Erfindung weist die Textilschicht 3 mindestens zwei untrennbar miteinander verwirkte, verwebte oder verstrickte Lagen 4, 5 auf, wobei die die Dekorseite darstellende Lage (4) mindestens ein Garn aus Naturfasern oder aus synthetischem Material enthält, und wobei die der Dekorseite abgewandte Lage 5 mindestens ein Garn enthält, das aus einem niedrig schmelzenden synthetischen Material besteht.

Besonders bevorzugt weist das niedrig schmelzende synthetische Material des Garns der Lage 5 einen Schmelzpunkt von 200 bis 240 °C, vorzugsweise von 210 bis 230 °C und besonders bevorzugt von 215 bis 225 °C auf.

Vorzugsweise ist die Schmelztemperatur des Garns der der Dekorseite abgewandten Lage 5 niedriger als die Massentemperatur des eingebrachten Kunststoffmaterials 2.

Weiterhin ist bevorzugt, dass die Temperatur des Kunststoffmaterials 2 im Bereich zwischen 230 und 270 °C, vorzugsweise im Bereich zwischen 240 und 260 °C liegt.

In einem bevorzugten Verfahren ist das Material des Garns der der Dekorseite abgewandten Lage 5 Polypropylen oder Polyamid, vorzugsweise Polyamid-6.

Bevorzugt beträgt die Stärke des Garns der der Dekorseite abgewandten Lage 5 1 bis 150 dtex.

In einem weiteren bevorzugten Verfahren ist das Material des Garns der die Dekorseite darstellenden Lage 4 ausgewählt aus der Gruppe Polyester, Polypropylen, Viskose, Naturfaser.

Bevorzugt beträgt das Flächengewicht der Textilschicht 3 von 75 bis 300 g/m², vorzugsweise von 100 bis 200 g/m².

In einer bevorzugten Ausführungsform wird als Kunststoffmaterial 2 ein Material verwendet ausgewählt aus der Gruppe Polyolefin, Polyethylen, Polypropylen, Polycarbonat, Polyamid, Acryl-Butadien-Styrol-Copolymer, Acryl-Butadien-Styrol-Polycarbonat-Copolymer, Polyvinylchlord, einem Polypropylen-Polyester-Gemisch, oder Gemische derselben. Besonders bevorzugt wird als Kunststoffmaterial Polypropylen oder PC-ABS (Acryl-Butadien-Styrol-Polycarbonat-Copolymer) verwendet. Vorzugsweise erfolgt das Formen des Kunststoffformteiles mittels Spritzguss, Hinterprägen, Hinterpressen oder Spritzprägen.

Weiterhin wird ein Kunststoffformteil bereitgestellt, das erhältlich ist nach dem oben erläuterten Verfahren.

Bevorzugt werden die Kunststoffformteile der vorliegenden Erfindung als Innenverkleidungsteil für Kraftfahrzeuge verwendet.

Gemäß einem Aspekt der Erfindung weist die Textilschicht 3 mindestens zwei untrennbar miteinander verwirkte, verwebte oder verstrickte Lagen 4, 5 auf. Dabei enthält die Lage 4, die die Dekorseite bildet, mindestens ein Garn aus Naturfasern oder aus synthetischem Material. Die Lage 5, die der Dekorseite abgewandt ist, weist dabei mindestens ein Garn auf, das aus einem niedrig schmelzendem synthetischen Material besteht. Hierbei können auch Zwei- oder Mehrkomponenten-Fasern verwendet werden, die niedrig schmelzende Schichten bzw. Anteile aufweisen. Die der Dekorseite abgewandte Lage 5 enthält somit bevorzugt ein Garn, das eine Schmelztemperatur aufweist, die niedriger ist als die Massentemperatur des eingebrachten Kunststoffmaterials. Beim Einbringen des heißen Kunststoffmaterials wird diesem durch das An- bzw. Aufschmelzen des Garns der der Dekorseite abgewandten Lage 5 Wärme entzogen, wodurch sich das ursprünglich (schmelz-)flüssige Kunststoffmaterial verfestigt. Dieser Vorgang ist so effizient, dass dadurch ein Vordringen des Kunststoffmaterials bis zur (Oberfläche der) Dekorseite der textilen Schicht verhindert wird.

Hieraus ergibt sich der Vorteil, dass auf weitere schützende Zwischenschichten, insbesondere Folien oder Vliese, verzichtet werden kann, wodurch Kosten und Gewicht verringert werden. Die vorliegende Erfindung stellt daher erstmals ein Formteil mit einem direkt hinterspritzten Textil bereit.

Ein weiterer Vorteil ergibt sich daraus, dass die Dekorschicht nicht in einem zusätzlichen Schritt vor oder nach dem Formen des Kunststoffteiles auf das Vlies geklebt werden muss. Die Bildung einer festen Verbindung zwischen textilem Dekor und Kunststoffträger entsteht erfindungsgemäß beim Formen, z.B. beim Hinterspritzen, nämlich dann, wenn das Kunststoffmaterial die Fasern der unteren Lage 5 (der der Dekorseite abgewandten Lage) zumindest teilweise anschmelzen und eine feste Verbindung mit der verbleibenden (nicht aufgeschmolzen) textilen Schicht eingehen.

### Beschreibung der Figuren

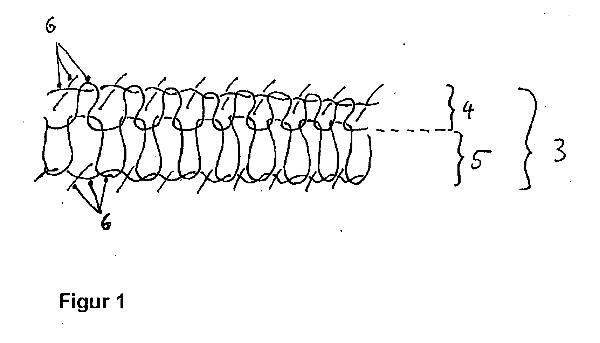

Fig. 1 zeigt einen schematischen Querschnitt durch eine textile Schicht 3, die ein Gewirke, Gestricke oder Gewebe darstellt, wie sie zur Herstellung des erfindungsgemäßen Kunststoffformteiles verwendet werden kann. In diesem Beispiel besteht die textile Schicht 3 aus zwei Lagen 4 und 5. Die obere Lage 4 stellt die Dekorseite des herzustellenden Kunststoffformteiles dar. Das Kunststoffmaterial bzw. der Kunststoffträger ist in Figur 1 noch nicht gezeigt. Die untere Lage 5 (die der Dekorseite abgewandte Lage 5) ist fest mit der oberen Lage 4 durch Verwirken, Verstricken oder Verweben verbunden. Die Fasern 6 der oberen Lage 4 können z.B. aus Polyester bestehen. Die Fasern 6 der unteren Lage 5 bestehen beispielsweise aus Polyamid, das einen Schmelzpunkt von ca. 220 °C aufweist.

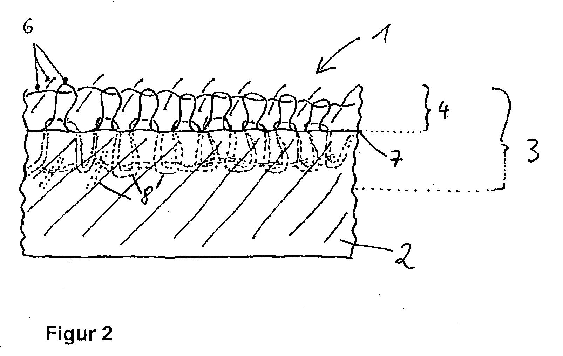

Fig. 2 zeigt einen schematischen Querschnitt durch das erfindungsgemäße Kunststoffformteil 1. In diesem Beispiel soll die textile Schicht 3 aus Figur 1 zur Herstellung des erfindungsgemäßen Kunststoffformteiles 1 verwendet worden sein. Die textile Schicht stellt, wie in Figur 1 schematisch dargestellt ist, ein Gewirke, Gestricke oder Gewebe dar. Wie in Figur 1 gezeigt, besteht die textile Schicht 3 aus zwei Lagen 4 und 5. Die obere Lage 4 stellt die Dekorseite des herzustellenden Kunststoffformteiles dar. Die untere Lage 5 (die der Dekorseite abgewandte Lage 5) ist fest mit der oberen Lage 4 durch Verwirken, Verstricken oder Verweben verbunden. Die Fasern 6, der oberen Lage 4 bestehen in diesem Beispiel aus Polyester. Die Fasern 6, der unteren Lage 5 bestehen in diesem Beispiel aus Polyamid. Polyamid weist einen Schmelzpunkt von ca. 220 °C auf. Die Massentemperatur des zum Hinterspritzen verwendeten Kunststoffmaterials 2 (z.B. Polypropylen oder PC-ABS) beträgt ca. 240 bis 260 °C. Daher ist der Schmelzpunkt der Polyamidfasern 6 der unteren Lage 5 von ca. 220 °C niedriger als die genannte Massentemperatur des Kunststoffmaterials 2. Beim Hinterspritzen der textilen Schicht 3 mit dem Kunststoffmaterial 2 dringt dieses in die untere Lage 5 ein und lässt deren Fasern anschmelzen: dies ist in Figur 2 gezeigt: der Teil des Textils, der vom Kunststoffmaterial 2 durchdrungen ist (Lage 5), ist zumindest teilweise angeschmolzen, wobei dem Kunststoffmaterial Wärme entzogen wurde und sich dieses dadurch verfestigte. Folglich stoppte die Durchdringung des Textils mit dem Kunststoffmaterial 2 und es erfolgte daher keine Durchdringung bis zur Oberfläche des Dekors. Die obere Lage 4 enthält deshalb kein oder nur wenig Kunststoffmaterial. Mit der Bezugsziffer 9 ist die Grenze des ausgehärteten Kunststoffmaterials 2 innerhalb der textilen Schicht 3 schematisch dargestellt. Die Fasern der Lage 5, die in der Figur mit dem Bezugszeichen 8 gekennzeichnet sind, sind angeschmolzen (siehe Figur 2 als Strichellinien) und im ausgehärteten Kunststoffmaterial 2 eingebettet und verankert.

### Beispiele

**Beispiel 1:** Eine textile Schicht 3 in Form eines Gewirkes mit einem Flächengewicht von 220 g/m², bestehend aus zwei Lagen 4 und 5, die miteinander verwirkt sind, wird lose in ein Werkzeug eingelegt und mit einem thermoplastischen Kunststoff (Polypropylen) von der Seite der Lage 5 her hinterspritzt, wobei die Temperatur des eingespritzten Polypropylens ca. 240°C aufweist. Das Garn der Lage 4 gesteht aus Polyester. Das Garn der Lage 5 besteht aus Polyamid-6 mit einem Schmelzpunkt von ca. 220°C und weist eine Faserstärke von 80 dtex auf. Nach Beendigung des Hinterspritzvorgangs und Erstarren des Kunststoffmaterials zeigte sich, dass das eingespritzte Polypropylen die untere Lage 5 des textilen Schicht 3 in Richtung der Schichtdicke durchdringt, wobei das PolyamidMaterial der Lage 5 angeschmolzen ist und in das ausgehärtete Kunststoffmaterial eingebettet ist. Dadurch ist eine innige Verbindung zwischen der verbleibenden textilen Schicht und dem eingespritzten Polypropylen 2 gebildet worden. Die Durchdringung der Textilschicht mit Polypropylen ist jedoch gestoppt, so dass die obere Lage 4 aus Polyester (die Dekorlage) kein Kunststoffmaterial 2 an der Oberfläche enthält. Somit weist das Kunststoffformteil ein ansprechendes hochwertiges textiles Dekor aus Polyester auf, wobei der Kunststoffträger von Polypropylen gebildet wird.

**Beispiel 2:** Eine textile Schicht 3 in Form eines Gewirkes mit einem Flächengewicht von 240 g/m², bestehend aus zwei Lagen 4 und 5, die miteinander verwirkt sind, wird lose in ein Werkzeug eingelegt und mit einem PC-ABS von der Seite der Lage 5 her hinterspritzt, wobei die Temperatur des eingespritzten PC-ABS ca. 260°C aufweist. Das Garn der Lage 4 gesteht aus Polyester. Das Garn der Lage 5 besteht aus Polyamid-6 mit einem Schmelzpunkt von ca. 220°C und weist eine Faserstärke von 80 dtex auf. Nach Beendigung des Hinterspritzvorgangs und Erstarren des Kunststoffmaterials zeigte sich, dass das PC-ABS die untere Lage 5 des textilen Schicht 3 aus Polyamid-6 in Richtung der Schichtdicke durchdringt, wobei das Material der Lage 5 angeschmolzen ist und in das ausgehärtete Kunststoffmaterial eingebettet ist. Dadurch ist eine innige Verbindung zwischen der verbleibenden textilen Schicht aus Polyester (Lage 4) und dem Kunststoffträger 2 aus PC-ABS gebildet worden. Die Durchdringung der Textilschicht mit PC-ABS ist jedoch gestoppt, so dass die obere Lage 4 (die Dekorlage) kein Kunststoffmaterial 2 an der Oberfläche enthält. Somit weist das Kunststoffformteil ein ansprechendes hochwertiges textiles Dekor aus Polyester auf.

**Beispiel 3:** Eine einlagige textile Schicht 3 in Form eines Gewirkes mit einem Flächengewicht von 230 g/m², das lediglich ein Polypropylengarn mit einer Faserstärke von 100 dtex enthält, d.h. die textile Schicht 3 besteht nur einer Lage aus Polypropylen, wird lose in ein Werkzeug eingelegt und mit Polypropylen hinterspritzt. Nach Beendigung des Hinterspritzvorgangs und Erstarren des Kunststoffmaterials zeigte sich, dass das eingespritzte Polypropylen die textile Schicht 3 aus Polypropylen in Richtung der Schichtdicke nur teilweise durchdringt, wobei ein Teil des Materials des Textils angeschmolzen ist. Dadurch ist eine innige Verbindung zwischen dem verbleibenden nicht aufgeschmolzenen Textil aus Polypropylen und dem Kunststoffträger 2 aus Polypropylen gebildet worden. Die Durchdringung der Textilschicht mit Polypropylen ist jedoch gestoppt, so dass kein Kunststoffmaterial 2 an die Oberfläche des Textils gelangt ist. Somit weist das Kunststoffformteil ein textiles Dekor aus Polypropylen und einen Träger aus Polypropylen auf.

### Bezugszeichenliste

- 1: Kunststoffformteil
- 2: Kunststoffmaterial
- 3: Textilschicht
- 4: Dekorlage
- 5: untere Lage
- 6: Garn/Faser
- 7: Grenze des Kunststoffmaterials innerhalb der Vliesschicht
- 8: angeschmolzene Fasern der unteren Lage 5

## Patentansprüche

1. Hinterspritztes, hinterpresstes oder spritzgeprägtes Kunststoffformteil (1), mit einer gewirkten, gewebten oder gestrickten textilen Schicht (3) als Dekor, wobei die Textilschicht (3) direkt mit einem Kunststoffmaterial (2) verbundstoffartig verbunden ist, **wobei** zwischen Textilschicht (3) und dem Kunststoffmaterial (2) keine weiteren Schichten vorhanden sind, **dadurch gekennzeichnet, dass** die Textilschicht (3) mindestens zwei untrennbar miteinander verwirkte, verwebte oder verstrickte Lagen (4, 5) aufweist, wobei die die Dekorseite darstellende Lage (4) mindestens ein Garn aus Naturfasern oder aus synthetischem Material enthält, und wobei die der Dekorseite abgewandte Lage (5) mindestens ein Garn enthält, das aus einem niedrig schmelzendem synthetischen Material besteht.

2. Das Kunststoffmaterial nach Anspruch **1, dadurch gekennzeichnet, dass** das niedrig schmelzende synthetische Material des Garns der Lage (5) einen Schmelzpunkt von 200 bis 240 °C, vorzugsweise von 210 bis 230 °C und besonders bevorzugt von 215 bis 225 °C aufweist.

3. Das Kunststoffformteil nach Anspruch **1** oder **2, dadurch gekennzeichnet, dass** das Garn aus einem niedrig schmelzenden synthetischen Material der der Dekorseite abgewandten Lage (5) eine Schmelztemperatur aufweist, die niedriger ist als die Massentemperatur des eingebrachten Kunststoffmaterials (2).

4. Das Kunststoffformteil nach einem der Ansprüche **1** bis **3, dadurch gekennzeichnet, dass** das Material des Garns der der Dekorseite abgewandten Lage (5) Polypropylen oder Polyamids, vorzugsweise Polyamid-6 ist.

5. Das Kunststoffformteil nach einem der Ansprüche **1** bis **4, dadurch gekennzeichnet, dass** die Stärke des Garns der der Dekorseite abgewandten Lage (5) 1 bis 150 dtex beträgt.

6. Das Kunststoffformteil nach einem der Ansprüche **1** bis **5, dadurch gekennzeichnet, dass** das Material des Garns der die Dekorseite darstellenden Lage (4) ausgewählt ist aus der Gruppe Polyester, Polypropylen, Viskose, Naturfaser.

7. Das Kunststoffformteil nach einem der Ansprüche **1** bis **6, dadurch gekennzeichnet, dass** das Flächengewicht der Textilschicht (3) von 75 bis 300 g/m², vorzugsweise von 100 bis 200 g/m² beträgt.

8. Das Kunststoffformteil nach einem der Ansprüche 1 bis **7, dadurch gekennzeichnet, dass** das Kunststoffmaterial (2) aus thermoplastischen Polymeren ausgewählt ist aus der Gruppe Polyolefin, Polyethylen, Polypropylen, Polycarbonat, Polyamid, Acryl-Butadien-Styrol-Copolymer, Acryl-Butadien-Styrol-Polycarbonat-Copolymer, Polyvinylchlord, einem Polypropylen-Polyester-Gemisch, oder Gemische derselben.

9. Das Kunststoffformteil nach einem der Ansprüche 1 bis **8, dadurch gekennzeichnet, dass** das Kunststoffmaterial (2) aus Polypropylen, oder PC-ABS (Acryl-Butadien-Styrol-Polycarbonat-Copolymer) besteht.

10. Das Kunststoffformteil nach einem der Ansprüche 1 bis **8, dadurch gekennzeichnet, dass** es ein durch Formung mittels Spritzguss, Hinterprägen, Hinterpressen oder Spritzprägen hergestelltes Kunststoffformteil (1) darstellt.

11. Verfahren zur Herstellung eines Kunststoffformteiles (1), wobei eine gewirkte, gewebte oder gestrickte textile Schicht (3) auf der der Dekorseite abgewandten Seite mit einem schmelzflüssigen Kunststoffmaterial (2) beaufschlagt wird, so dass die Textilschicht (3) teilweise vom Kunststoffmaterial (2) durchdrungen wird, jedoch nicht bis zur Oberfläche der Dekorlage (4) der Textilschicht (3) durchdringt, **wobei** zwischen Textilschicht (3) und dem Kunststoffmaterial keine weitere Schichten angebracht werden, **dadurch gekennzeichnet, dass** die Textilschicht (3) mindestens zwei untrennbar miteinander verwirkte, verwebte oder verstrickte Lagen (4, 5) aufweist, wobei die die Dekorseite darstellende Lage (4) mindestens ein Garn aus Naturfasern oder aus synthetischem Material enthält, und wobei die der Dekorseite abgewandte Lage (5) mindestens ein Garn enthält, das aus einem niedrig schmelzendem synthetischen Material besteht.

12. Das Verfahren nach **Anspruch 11, dadurch gekennzeichnet, dass** das niedrig schmelzende synthetische Material des Garns der Lage (5) einen Schmelzpunkt von 200 bis 240 °C, vorzugsweise von 210 bis 230 °C und besonders bevorzugt von 215 bis 225 °C aufweist.

13. Das Verfahren nach einem der Ansprüche **11 oder 12, dadurch gekennzeichnet, dass** das Garn aus einem niedrig schmelzenden synthetischen Material der der Dekorseite abgewandten Lage (5) eine Schmelztemperatur aufweist, die niedriger ist als die Massentemperatur des eingebrachten Kunststoffmaterials (2).

14. Das Verfahren nach einem der Ansprüche **11** bis **13, dadurch gekennzeichnet, dass** die Temperatur des Kunststoffmaterials (2) im Bereich zwischen 230 und 270 °C, vorzugsweise zwischen 240 und 260°C liegt.

15. Das Verfahren nach einem der Ansprüche **11** bis **14, dadurch gekennzeichnet, dass** das Material des Garns der der Dekorseite abgewandten Lage (5) Polypropylen oder Polyamid, vorzugsweise Polyamid-6 ist.

16. Das Verfahren nach einem der Ansprüche **11** bis **15, dadurch gekennzeichnet, dass** die Stärke des Garns der der Dekorseite abgewandten Lage (5) 1 bis 150 dtex beträgt.

17. Das Verfahren nach einem der Ansprüche **11** bis **16, dadurch gekennzeichnet, dass** das Material des Garns der die Dekorseite darstellenden Lage (4) ausgewählt ist aus der Gruppe Polyester, Polypropylen, Viskose, Naturfaser.

18. Das Verfahren nach einem der Ansprüche 11 bis 17, **dadurch gekennzeichnet, dass** das Flächengewicht der Textilschicht (3) von 75 bis 300 g/m², vorzugsweise von 100 bis 200 g/m² beträgt.

19. Das Verfahren nach einem der Ansprüche **11** bis **18, dadurch gekennzeichnet, dass** als Kunststoffmaterial (2) ein Material verwendet wird ausgewählt aus der Gruppe Polyolefin, Polyethylen, Polypropylen, Polycarbonat, Polyamid, Acryl-Butadien-Styrol-Cpolymer, Acryl-Butadien-Styrol-Polycarbonat-Copolymer, Polyvinylchlord, einem Polypropylen-Polyester-Gemisch oder Gemische derselben.

20. Das Verfahren nach einem der Ansprüche **11** bis **19, dadurch gekennzeichnet, dass** als Kunststoffmaterial (2) Polypropylen oder PC-ABS (Acryl-Butadien-Styrol-Polycarbonat-Copolymer) verwendet wird.

21. Das Verfahren nach einem der Ansprüche **11** bis **20, dadurch gekennzeichnet, dass** das Formen des Kunststoffformteiles (1) mittels Spritzguss, Hinterprägen, Hinterpressen oder Spritzprägen erfolgt.

22. Das Verfahren nach einem der Ansprüche **11** bis **21, dadurch gekennzeichnet, dass** ein Kunststoffformteil mit den Merkmalen der Ansprüche 1 bis **10** hergestellt wird.

23. Ein Kunststoffformteil erhältlich nach einem Verfahren nach einem der Ansprüche **11** bis **22.**

24. Verwendung des Kunststoffformteiles nach den Ansprüchen 1 bis **10** oder Verwendung des durch das Verfahren nach den Ansprüchen **11** bits **22** hergestellten Kunststoffformteils als Innenverkleidungsteil für Kraftfahrzeuge.

## Claims

1. A plastic molded part (1) prepared by back injection molding, back compression molding or injection-compression molding comprising a knitted, woven or knitted textile layer (3) as a decorative part, wherein said textile layer (3) is directly bonded to a plastic material (2) in a composite manner, wherein there are no further layers between said textile layer (3) and said plastic material (2), **characterized in that** said textile layer (3) has at least two plies (4, 5) inseparably knitted, woven or knitted together, wherein the ply (4) representing the decorative side contains at least one yarn of natural fibers or a synthetic material, and wherein the ply (5) facing away from the decorative side contains at least one yarn consisting of a low melting synthetic material.

2. The plastic material according to claim 1, **characterized in that** said low melting synthetic material of the yarn of ply (5) has a melting point of from 200 to 240 °C, preferably from 210 to 230 °C, more preferably from 215 to 225 °C.

3. The plastic molded part according to claim 1 or 2, **characterized in that** said yarn of a low melting synthetic material of the ply (5) facing away from the decorative side has a melting temperature that is lower than the molding temperature of the introduced plastic material (2).

4. The plastic molded part according to any of claims 1 to 3, **characterized in that** the material of said yarn of the ply (5) facing away from the decorative side is polypropylene or polyamide, preferably polyamide-6.

5. The plastic molded part according to any of claims 1 to 4, **characterized in that** the linear density of the yarn of the ply (5) facing away from the decorative side is from 1 to 150 dtex.

6. The plastic molded part according to any of claims 1 to 5, **characterized in that** the material of said yarn of the ply (4) representing the decorative side is selected from the group consisting of polyester, polypropylene, viscose and natural fiber.

7. The plastic molded part according to any of claims 1 to 6, **characterized in that** the basis weight of the textile layer (3) is from 75 to 300 g/m², preferably from 100 to 200 g/m².

8. The plastic molded part according to any of claims 1 to 7, **characterized in that** the plastic material (2) is selected from thermoplastic polymers from the group consisting of polyolefin, polyethylene, polypropylene, polycarbonate, polyamide, acrylic/butadiene/styrene copolymer, acrylic/butadiene/styrene/polycarbonate copolymer, polyvinyl chloride, a polypropylene/polyester blend, or mixtures thereof.

9. The plastic molded part according to any of claims 1 to 8, **characterized in that** the plastic material (2) is polypropylene or PC-ABS (acrylic/butadiene/styrene/polycarbonate copolymer).

10. The plastic molded part according to any of claims 1 to 8, **characterized by** being a plastic molded part (1) prepared by forming by means of injection molding, low pressure molding, back compression molding or injection-compression molding.

11. A process for preparing a plastic molded part (1), wherein a molten plastic material (2) is applied to a knitted, woven or knitted textile layer (3) on the side thereof facing away from the decorative side, so that the plastic material (2) in part permeates the textile layer (3), but does not permeate to the surface of the decorative ply (4) of the textile layer (3), wherein no further layers are applied between said textile layer (3) and said plastic material, **characterized in that** said textile layer (3) has at least two plies (4, 5) inseparably knitted, woven or knitted together, wherein the ply (4) representing the decorative side contains at least one yarn of natural fibers or a synthetic material, and wherein the ply (5) facing away from the decorative side contains at least one yarn consisting of a low melting synthetic material.

12. The process according to claim 11, **characterized in that** said low melting synthetic material of the yarn of ply (5) has a melting point of from 200 to 240 °C, preferably from 210 to 230°C, more preferably from 215 to 225 °C.

13. The process according to either of claims 11 or 12, **characterized in that** said yarn of a low melting synthetic material of the ply (5) facing away from the decorative side has a melting temperature that is lower than the molding temperature of the introduced plastic material (2).

14. The process according to any of claims 11 to 13, **characterized in that** the temperature of said plastic material (2) is within a range of from 230 to 270 °C, preferably from 240 to 260 °C.

15. The process according to any of claims 11 to 14, **characterized in that** the material of the yarn of the ply (5) facing away from the decorative side is polypropylene or polyamide, preferably polyamide-6.

16. The process according to any of claims 11 to 15, **characterized in that** the linear density of the yarn of the ply (5) facing away from the decorative side is from 1 to 150 dtex.

17. The process according to any of claims 11 to 16, **characterized in that** the material of said yarn of the ply (4) representing the decorative side is selected from the group consisting of polyester, polypropylene, viscose and natural fiber.

18. The process according to any of claims 11 to 17, **characterized in that** the basis weight of the textile layer (3) is from 75 to 300 g/m², preferably from 100 to 200 g/m².

19. The process according to any of claims 11 to 18, **characterized in that** a material selected from thermoplastic polymers from the group consisting of polyolefin, polyethylene, polypropylene, polycarbonate, polyamide, acrylic/butadiene/styrene copolymer, acrylic/butadiene/styrene/polycarbonate copolymer, polyvinyl chloride, a polypropylene/polyester blend, or mixtures thereof is used as said plastic material (2).

20. The process according to any of claims 11 to 19, **characterized in that** polypropylene or PC-ABS (acrylic/butadiene/styrene/polycarbonate copolymer) is used as said plastic material (2).

21. The process according to any of claims 11 to 20, **characterized in that** the forming of the plastic molded part (1) is effected by injection molding, low pressure molding, back compression molding or injection-compression molding.

22. The process according to any of claims 11 to 21, **characterized in that** a plastic molded part having the features of claims 1 to 10 is prepared.

23. A plastic molded part obtainable by a process according to any of claims 11 to 22.

24. Use of the plastic molded part according to claims 1 to 10 or use of the plastic molded part prepared by the process according to claims 11 to 22 as an interior trim part for motor vehicles.

## Revendications

1. Pièce moulée en plastique (1) préparée par surmoulage par injection, surmoulage par compression ou surmoulage par estampage-injection, comprenant une couche textile à mailles, tissée ou tricotée (3) comme décoration, dans laquelle ladite couche textile (3) est reliée directement à un matériau plastique (2) à la manière d'un matériau composite, d'autres couches n'étant pas présentes entre la couche textile (3) et le matériau plastique (2), **caractérisée en ce que** la couche textile (3) comprend au moins deux feuilles (4, 5) qui sont inséparablement tissées à mailles, tissées ou tricotées l'une avec l'autre, dans laquelle la feuille représentant le côté décoratif (4) contient au moins un fil de fibres naturelles ou d'un matériau synthétique, et dans laquelle la feuille opposée au côté décoratif (5) contient au moins un fil consistant en un matériau synthétique à bas point de fusion.

2. Matériau plastique selon la revendication 1, **caractérisé en ce que** ledit matériau synthétique à bas point de fusion du fil de la feuille (5) a un point de fusion de 200 à 240 °C, de préférence de 210 à 230 °C et de préférence encore de 215 à 225 °C.

3. Pièce moulée en plastique selon la revendication 1 ou 2, **caractérisée en ce que** ledit fil consistant en un matériau synthétique à bas point de fusion de la feuille opposée au côté décoratif (5) a un point de fusion inférieur à la température de moulage du matériau plastique (2) introduit.

4. Pièce moulée en plastique selon l'une quelconque des revendications 1 à 3, **caractérisée en ce que** le matériau du fil de la feuille opposée au côté décoratif (5) est le polypropylène ou le polyamide, de préférence le polyamide-6.

5. Pièce moulée en plastique selon l'une quelconque des revendications 1 à 4, **caractérisée en ce que** la densité linéaire du fil de la feuille opposée au côté décoratif (5) est 1 à 150 dtex.

6. Pièce moulée en plastique selon l'une quelconque des revendications 1 à 5, **caractérisée en ce que** le matériau du fil de la feuille représentant le côté décoratif (4) est choisi dans le groupe consistant en polyester, polypropylène, viscose, fibre naturelle.

7. Pièce moulée en plastique selon l'une quelconque des revendications 1 à 6, **caractérisée en ce que** le poids de base de la couche textile (3) est 75 à 300 g/m², de préférence 100 à 200 g/m².

8. Pièce moulée en plastique selon l'une quelconque des revendications 1 à 7, **caractérisée en ce que** le matériau plastique (2) est choisi parmi des polymères thermoplastiques du groupe consistant en polyoléfine, polyéthylène, polypropylène, polycarbonate, polyamide, copolymère acryl/butadiène/styrène, copolymère acryl/butadiène/styrène/polycarbonate, poly-chlorure de vinyle, un mélange polypropylène-polyester ou des mélanges de ceux-ci.

9. Pièce moulée en plastique selon l'une quelconque des revendications 1 à 8, **caractérisée en ce que** le matériau plastique (2) consiste en polypropylène ou PC-ABS (copolymère acryl/butadiène/styrène/polycarbonate).

10. Pièce moulée en plastique selon l'une quelconque des revendications 1 à 8, **caractérisée en ce qu'**il est une pièce moulée en plastique (1) préparée par moulage au moyen de surmoulage par injection, surmoulage par estampage, surmoulage par compression ou surmoulage par estampage-injection.

11. Procédé pour la production d'une pièce moulée en plastique (1), dans lequel une couche textile à mailles, tissée ou tricotée (3) est fournie avec un matériau plastique (2) à l'état fondu sur le côté opposé au côté décoratif de sorte que la couche textile (3) soit partiellement pénétrée du matériau plastique (2), mais le dernier n'arrive pas jusqu'à la surface de la feuille décorative (4) de la couche textile (3), dans lequel d'autres couches ne sont pas fournies entre la couche textile (3) et le matériau plastique, **caractérisée en ce que** la couche textile (3) comprend au moins deux feuilles (4, 5) qui sont inséparablement tissées à mailles, tissées ou tricotées l'une avec l'autre, dans laquelle la feuille représentant le côté décoratif (4) contient au moins un fil de fibres naturelles ou d'un matériau synthétique, et dans laquelle la feuille opposée au côté décoratif (5) contient au moins un fil consistant en un matériau synthétique à bas point de fusion.

12. Procédé selon la revendication 11, **caractérisé en ce que** ledit matériau synthétique à bas point de fusion du fil de la feuille (5) a un point de fusion de 200 à 240 °C, de préférence de 210 à 230 °C et de préférence encore de 215 à 225 °C.

13. Procédé selon l'une des revendications 11 ou 12, **caractérisé en ce que** ledit fil consistant en un matériau synthétique à bas point de fusion de la feuille opposée au côté décoratif (5) a un point de fusion inférieur à la température de moulage du matériau plastique (2) introduit.

14. Procédé selon l'une quelconque des revendications 11 à 13, **caractérisé en ce que** la température du matériau plastique (2) est comprise entre 230 et 270 °C, de préférence entre 240 et 260 °C.

15. Procédé selon l'une quelconque des revendications 11 à 14, **caractérisé en ce que** le matériau du fil de la feuille opposée au côté décoratif (5) est le polypropylène ou le polyamide, de préférence le polyamide-6.

16. Procédé selon l'une quelconque des revendications 11 à 15, **caractérisé en ce que** la densité linéaire du fil de la feuille opposée au côté décoratif (5) est 1 à 150 dtex.

17. Procédé selon l'une quelconque des revendications 11 à 16, **caractérisé en ce que** le matériau du fil de la feuille représentant le côté décoratif (4) est choisi dans le groupe consistant en polyester, polypropylène, viscose, fibre naturelle.

18. Procédé selon l'une quelconque des revendications 11 à 17, **caractérisé en ce que** le poids de base de la couche textile (3) est 75 à 300 g/m², de préférence 100 à 200 g/m².

19. Procédé selon l'une quelconque des revendications 11 à 18, **caractérisé en ce qu'**un matériau choisi dans le groupe consistant en polyoléfine, polyéthylène, polypropylène, polycarbonate, polyamide, copolymère acryl/butadiène/styrène, copolymère acryl/butadiène/styrène/polycarbonate, poly-chlorure de vinyle, un mélange polypropylène-polyester ou des mélanges de ceux-ci est choisi comme matériau plastique (2).

20. Procédé selon l'une quelconque des revendications 11 à 19, **caractérisé en ce que** le polypropylène ou le PC-ABS (copolymère acryl/butadiène/styrène/polycarbonate) est utilisé comme matériau plastique (2).

21. Procédé selon l'une quelconque des revendications 11 à 20, **caractérisé en ce que** ledit moulage de la pièce moulée en plastique (1) est effectué par surmoulage par injection, surmoulage par estampage, surmoulage par compression ou surmoulage par estampage-injection.

22. Procédé selon l'une quelconque des revendications 11 à 21, **caractérisé en ce qu'**une pièce moulée en plastique ayant les caractéristiques des revendications 1 à 10 est préparée.

23. Pièce moulée en plastique qui peut être obtenue par un procédé selon l'une quelconque des revendications 11 à 22.

24. Utilisation de la pièce moulée en plastique selon les revendications 1 à 10 ou utilisation de la pièce moulée préparée par le procédé selon les revendications 11 à 22 comme partie de garniture intérieure pour véhicules à moteur.
